# EUROPEAN PATENT APPLICATION

(11) **EP 2 388 981 A1**
(43) Date of publication of application: **23.11.2011**
(21) Application number: 11161993.8
(22) Date of filing: 12.04.2011
(51) Int. Cl.: H04M 1/725, H04M 1/04, H04M 19/04

(54) **Vibrating motor disposed external to electronic device**

(30) Priority: 26.04.2010 US 767187
(71) Applicant: Sony Ericsson Mobile Communications AB, 221 88 Lund (SE)
(72) Inventor: Thornton, Curtis, Pittsboro, NC 27312 (US); Bart, Reier, Cary, NC 27519 (US)
(74) Representative: VALEA AB

(57) **Abstract**

A system for providing vibratory alerts includes an electronic device 110 having a second housing and configured to provide vibratory alert control signals. The system further includes a vibrating motor disposed within a first housing 130, 140 that is external to the second housing of the electronic device 110, wherein the first housing 130, 140 is mountable adjacent to or near the body of a user 100 to cause vibratory alerts in response to the vibratory alert control signals, and wherein the first housing 130 includes one of: a clip mounted externally on the second housing of the electronic device 110 and wherein the clip is configured to clip the electronic device 110 adjacent to the body of the user 100, a holster 140 to hold the electronic device 110 and wherein the holster 140 is configured to hang, clip, or affix the first housing 140 adjacent to or near the body of the user 100, a wrist band of a bracelet, or a buckle or strap of a belt.

## Description

### BACKGROUND

Consumer electronic products with vibrating alerts are quite common today. From pagers to cellular telephones, a silent alert feature is typically standard in these devices to alert a user, for example, of an incoming call or message. The most common way to provide a vibrating alert is with the use of a small motor, driving an unbalanced weight on a rotating shaft. Such motors are placed inside the electronic device such that when the user has an incoming message or call, the motor spins, thereby vibrating the electronic device.

### SUMMARY

In one exemplary embodiment, a device may include a first housing that is mountable adjacent to, or near, a body of a user. The device may further include a vibrating motor disposed within the first housing, wherein the first housing is external to, and distinct from, a second housing of an electronic device that provides control signals to the vibrating motor of the device, and wherein the first housing comprises one of: a clip mounted externally on the second housing of the electronic device and wherein the clip is configured to clip the electronic device adjacent to the body of the user, or a holster that is configurable to hold the electronic device and wherein the holster is usable to hang, clip, or affix the first housing in adjacent to or near the body of the user

Additionally, the clip may be mounted externally on the second housing via a hinge.

Additionally, the hinge may include a spring hinge.

Additionally, the vibrating motor may be disposed adjacent a top surface of the clip.

Additionally, the clip may be removably attached to the second housing.

Additionally, the electronic device may include one of a pager or a cellular radiotelephone.

Additionally, the device may include a wired electrical connection, wherein the control signals may be supplied by the electronic device to the vibrating motor via the wired electrical connection.

Additionally, the electronic device may include exposed electrical pads and the holster may include contacts that align with the exposed electrical pads to produce the wired electrical connection.

Additionally, the device may include a receiver to receive the control signals from the electronic device via a wireless connection.

Additionally, the wireless connection may include a BlueTooth wireless connection.

In another exemplary embodiment, a device may include a first housing that is mountable adjacent to, or near, a body of a user. The device may further include a vibrating motor disposed within the first housing, wherein the first housing may be external to, and distinct from, a second housing of an electronic device may provide control signals to the vibrating motor of the device, and wherein the first housing may include a wrist band of a bracelet, or a buckle or strap of a belt.

Additionally, the electronic device may include one of a pager or a cellular radiotelephone.

Additionally, the device may include a receiver to receive the control signals from the electronic device via a wireless connection.

Additionally, the wireless connection may include a BlueTooth wireless connection.

In yet another exemplary embodiment, a system for providing vibratory alerts may include an electronic device having a second housing and configured to provide vibratory alert control signals. The system may further include a vibrating motor disposed within a first housing that is external to the second housing of the electronic device, wherein the first housing may be mountable adjacent to or near the body of a user to cause vibratory alerts in response to the vibratory alert control signals, and wherein the first housing may include one of: a clip mounted externally on the second housing of the electronic device and wherein the clip may be configured to clip the electronic device adjacent to the body of the user, a holster to hold the electronic device and wherein the holster is configured to hang, clip, or affix the first housing adjacent to or near the body of the user, a wrist band of a bracelet, or a buckle or strap of a belt.

Additionally, the electronic device may include one of a pager or a cellular radiotelephone.

Additionally, the system may include a wired electrical connection, wherein the vibratory alert control signals may be supplied by the electronic device to the vibrating motor in the clip or the holster via the wired electrical connection.

Additionally, the electronic device may include exposed electrical pads and wherein the holster may include contacts that align with the exposed electrical pads to produce the wired electrical connection.

Additionally, the system may include a transmitter associated with the electronic device, and a receiver associated with the vibrating motor, wherein the vibratory alert control signals may be supplied by the electronic device to the vibrating motor via a wireless connection between the transmitter and the receiver.

Additionally, the wireless connection may include a BlueTooth wireless connection.

### BRIEF DESCRIPTION OF THE DRAWINGS

The accompanying drawings, which are incorporated in and constitute a part of this specification, illustrate one or more embodiments described herein and, together with the description, explain these embodiments. In the drawings:

FIG. 1 is a diagram illustrating an overview of exemplary embodiments described herein;

FIGS. 2A and 2B are diagrams that depict an exemplary implementation in which the vibrating motor of FIG. 1 is disposed within the housing of a clip attached to the housing of the electronic device;

FIG. 3 is a diagram that depicts another exemplary implementation in which the vibrating motor of FIG. 1 is disposed within a housing of a holster that is coupled to the electronic device;

FIG. 4 is a diagram of an exemplary implementation in which a wired connection is used to connect the electronic device with the vibrating motor;

FIG. 5 is a diagram that depicts an exemplary implementation in which the vibrating motor of FIG. 1 is disposed within a wristband of a wristwatch;

FIG. 6 is a diagram that depicts another exemplary implementation in which the vibrating motor of FIG. 1 is disposed within a bracelet; and

FIG. 7 is a diagram that depicts an exemplary implementation in which a wireless connection is used to connect the electronic device with the vibrating motor of FIG. 1.

### DETAILED DESCRIPTION

The following detailed description refers to the accompanying drawings. The same reference numbers in different drawings may identify the same or similar elements. Also, the following detailed description does not limit the invention.

A problem with current designs of vibrating motors in electronic devices occurs when the vibrating motor is separated from the user's body. The vibrating motor may be separated from the body when, for example, the electronic device is placed in a holster or placed on a table. When the electronic device is placed in a holster, the body may be insulated from the motion generated by the vibrating motor, leading to missed messages or calls.

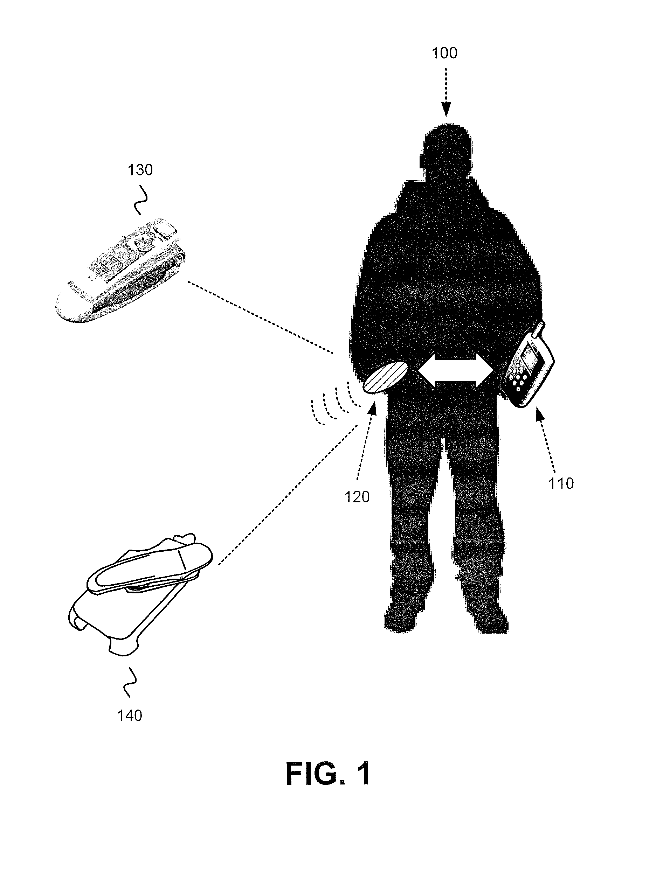

FIG. 1 illustrates an overview of the disposition of a vibrating motor, for alerts associated with an electronic device, external to the electronic device such that the vibrating motor can be located adjacent, or nearly adjacent, to the body of the user. Location of the vibrating motor adjacent, or nearly adjacent, to the body of the user permits an enhanced tactile response from the user such that the user can more easily recognize a "buzzing" alert by the vibrating motor.

As shown in FIG. 1, a user 100 may utilize a system comprising an electronic device 110, which has an associated vibrating motor 120, for providing vibratory alerts to user 100. In accordance with embodiments described herein, vibrating motor 120 may be located externally to electronic device 110 such that vibrating motor may placed adjacent, or nearly adjacent the skin of user 100 - even, in one embodiment, when electronic device 110 is not adjacent the skin of user 100. For example, in one exemplary implementation, a device comprising vibrating motor 120 may be located externally to electronic device 110 in an external clip housing 130 on a housing of electronic device 110 for "clipping" electronic device 110 to a garment, belt, etc. In an alternative implementation, vibrating motor 120 may be located externally to electronic device in a holster 140 that may be clipped, hung, or affixed to user 100, or to user 100's s clothing. In yet further alternative implementations, vibrating motor 120 may further be located externally from electronic device 110 within other types of articles or devices not shown in FIG. 1, including, for example, in belts (e.g., in the belt buckle or belt strap), in wristwatch wristbands, in wristbands of bracelets, etc., where the other types of articles or devices may be attached, clipped, or affixed in some manner such that vibrating motor 120 is located adjacent, or nearly adjacent, the skin of user 100.

Electronic device 110 may include any type of electronic appliance that may utilize a vibrating motor for causing a vibratory tactile alert to the user of the electronic appliance. For example, electronic device 110 may include a cellular radiotelephone, a pager, a personal digital assistant (PDA), a gaming device, or a media player device. Vibrating motor 120 may include any type of vibrating motor. Because vibrating motor 120 may be adjacent, or nearly adjacent the skin of user 100, vibrating motor 120 may be sized smaller than if placed elsewhere, while still providing user 100 with the same level of tactile alert (e.g. tactile response from the user).

A wired or wireless connection may be used to send control signals from electronic device 110 to vibrating motor 120. In implementations using a wired connection, a first housing of an article or device in which vibrating motor 120 may be disposed may include electrical contacts (e.g., spring contacts) that permit electrical contact with exposed pads on electronic device 110 when electronic device 110 is inserted within the first housing of the article or device. For example, if the article or device includes a holster, then the holster may include electrical contacts within the holster that align with the exposed contacts on electronic device 110 when electronic device 110 is inserted within the holster. In implementations using a wireless connection, the article or device in which vibrating motor 120 may be disposed may further include radiofrequency (RF) circuitry and electronics for enabling control signals to be sent via wireless RF from electronic device 110 to vibrating motor 120. For example, the RF circuitry and electronics may implement the BlueTooth standard, and may receive RF control signals from electronic device 110 via BlueTooth.

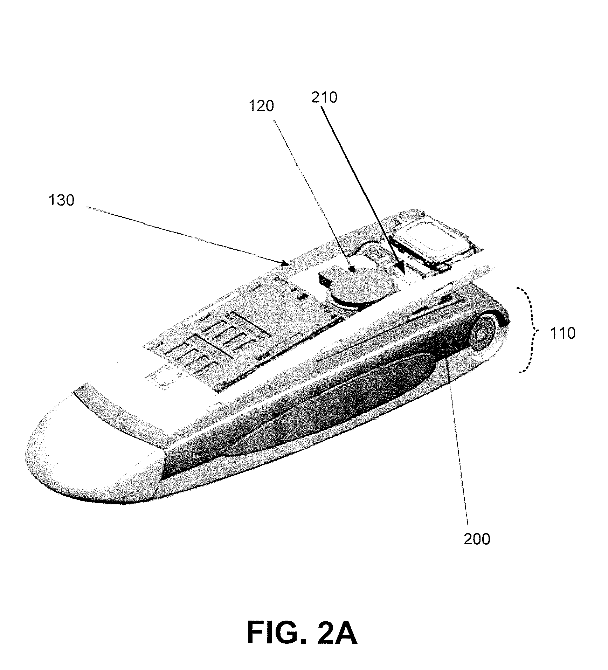

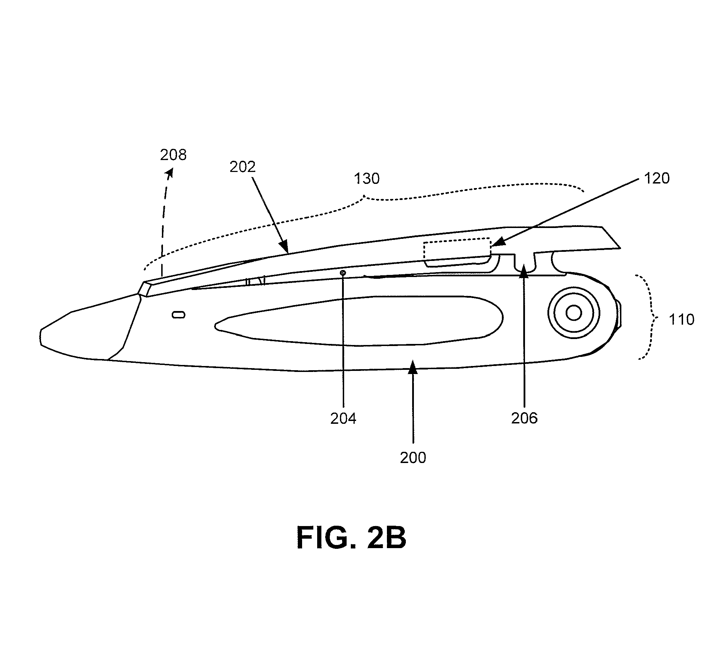

FIGS. 2A and 2B depict an exemplary implementation of a system comprising a device in which vibrating motor 120 is disposed within a housing of a clip ("clip housing 130"). The clip housing 130 may be understood to be comprised in a first housing. Clip housing 130 is shown without a top cover, exposing motor 120, a spring 210 (FIG. 2A) for a spring hinge 206 (FIG. 2B), and other electronic components. Clip housing 130 may be attached to the housing 200 of electronic device 110 by, for example, spring hinge 206. The housing 200 of the electronic device 110 may be understood to be comprised in a second housing. In one implementation, clip housing 130 may allow electronic device 110 to be clipped to user 100's s clothes (e.g., clipped to a belt, clipped to a pocket, etc.). Clip housing 130 may move in the direction of arrow 208 about hinge 206 so that clothing, for example, may slide into a space 204 between housing 200 of device 110 and clip housing 130. Top surface 202 of clip housing 130 may be situated, in this example, adjacent or nearly adjacent to the skin of user 100. In one embodiment, clip housing 130 may be permanently attached to electronic device 110. In another embodiment, the clip and clip housing 130 may be removably attached to electronic device 110.

In the exemplary implementation of FIGS. 2A and 2B, a wired connection may be used to send control signals from electronic device 110 to vibrating motor 120. By placing vibrating motor 120 in clip housing 130, clip housing 130 may be used, for example, to clip vibrating motor 120 adjacent, or nearly adjacent, user 100's skin such that user 100 may easily feel vibration of vibrating motor 120.

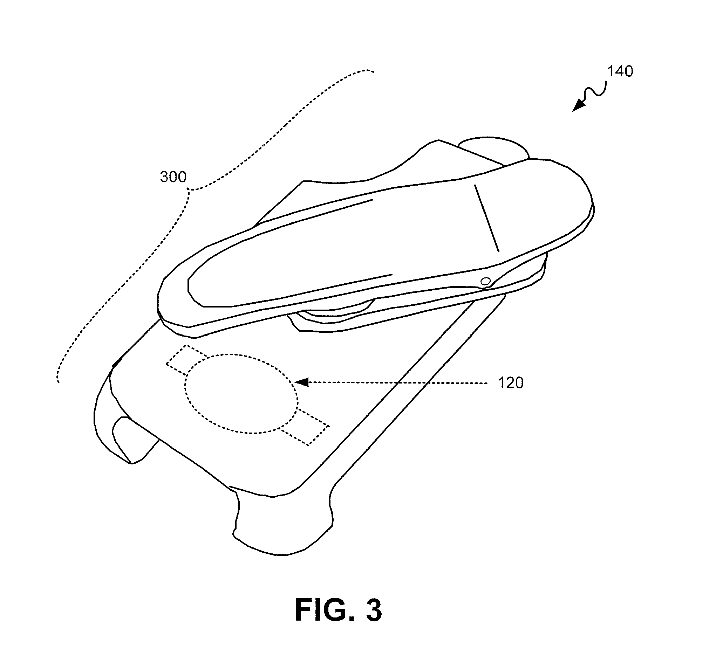

FIG. 3 depicts another exemplary implementation of a device in which vibrating motor 120 is disposed within a housing 300 of a holster 140 that may be clipped, hung from, or affixed to user 100 or to user 100's clothes (e.g., clipped to a belt, clipped to a pocket, hung from a belt loop, etc.). The housing 300 of the holster 140 may be understood to be comprised in a first housing. In the exemplary implementation of FIG. 3, a wired connection may be used to send control signals from electronic device 110 to vibrating motor 120. For example, holster housing 300 may include electrical contacts (not shown) that align with exposed electrical contacts, such as electrical pads, on electronic device 110 when electronic device 110 is inserted within the holster. Insertion of electronic device 110 within holster housing 300 electrically connects the housing contacts with the exposed contacts on electronic device 110. Control signals for causing vibrating motor 120 to vibrate may be sent from electronic device 110 to vibrating motor 120 via the electrical contacts in holster housing 300.

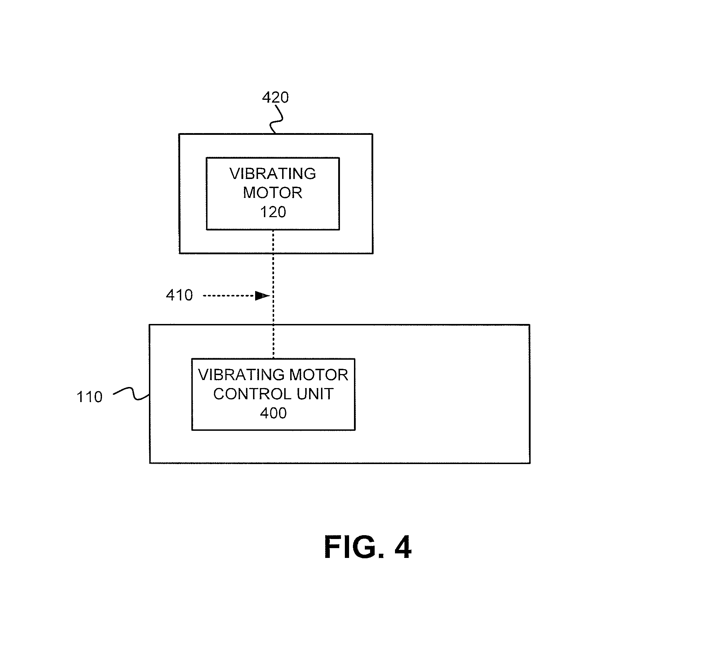

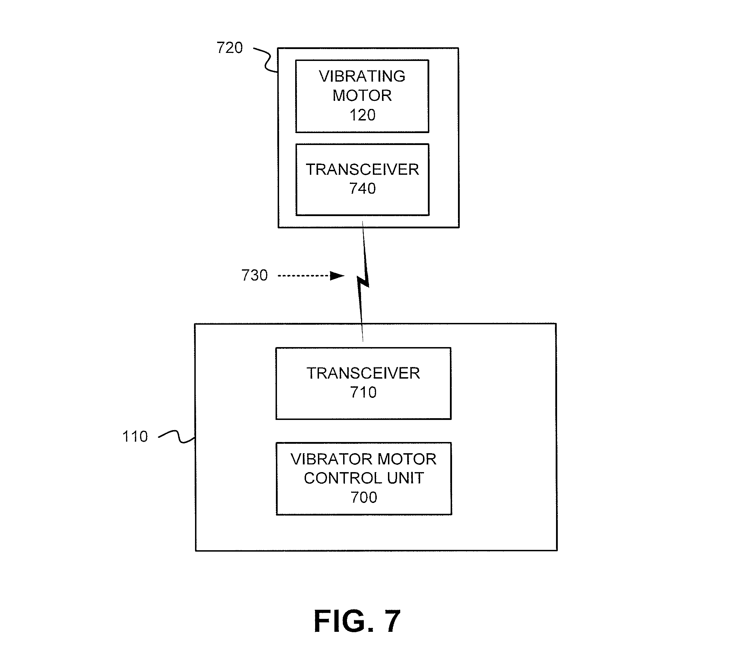

FIG. 4 is a diagram of an exemplary implementation in which a wired connection of a system is used to connect electronic device 110 with a device 420 comprising a vibrating motor 120. The exemplary implementation of FIG. 4 may, for example, correspond to use of the clip housing 130 of FIGS. 2A and 2B or holster 140 of FIG. 3. As shown in FIG. 4, electronic device 110 may, among other components, include a vibrating motor control unit 400. Vibrating motor control unit 400 may send control signals via a wired connection 410 to vibrating motor 120 in a device 420 (e.g., in holster 140 or clip housing 130) to cause vibrating motor 120 to vibrate as a vibratory alert to user 100. Electronic device 110 and device 420 may include additional components than those shown in FIG. 4. For example, if electronic device 110 is a cellular radiotelephone, device 110 may include a processing unit, a display, a transceiver, a battery, etc. FIG. 4 merely depicts some components of device 110 relevant to the control of vibrating motor 120 by device 110. Alternatively, instead of wired connection 410 for sending control signals to vibrating motor 120 in device 420, a wireless connection (e.g., similar to that shown in FIG. 7 below), such as, for example, a BlueTooth wireless connection, may be used for sending control signals from vibrating motor control unit 400 in electronic device 110 to vibrating motor 120 in device 420.

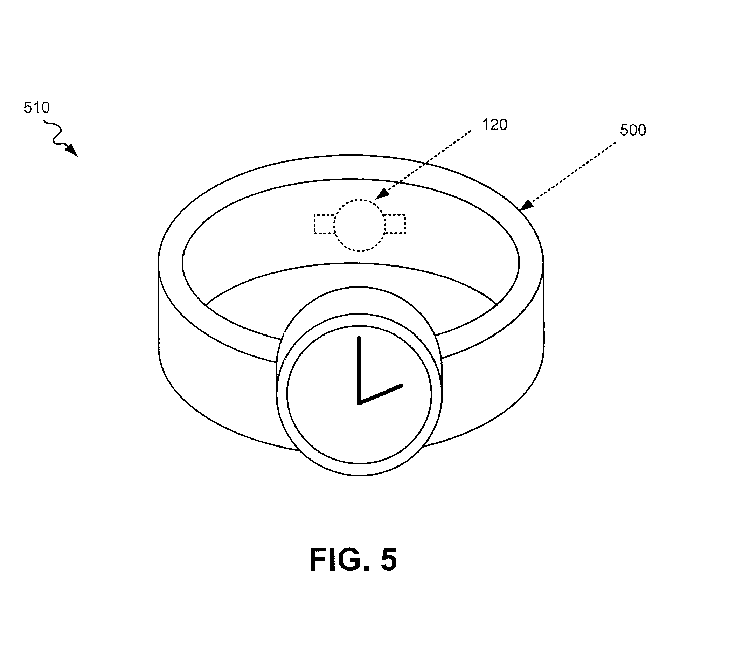

FIG. 5 depicts an exemplary implementation of a device in which vibrating motor 120 is disposed within a wristband 500 of a wristwatch 510. The wristband 500 may be understood to be comprised in a first housing. In the exemplary implementation of FIG. 5, a wireless connection may be used to send control signals from electronic device 110 to vibrating motor 120. For example, in one implementation, the wireless connection may include a BlueTooth wireless connection. By placing vibrating motor 120 in wristband 500, vibrating motor 120 may be located nearly adjacent user 100's skin such that when wristwatch 510 is worn by user 100, user 100 may easily feel any vibration of vibrating motor 120.

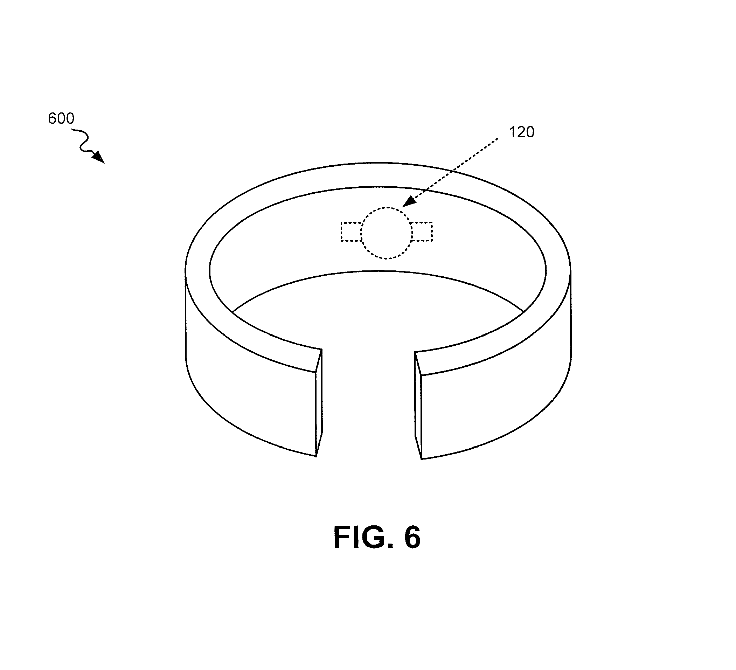

FIG. 6 depicts another exemplary implementation of a device in which vibrating motor 120 is disposed within a wristband of a bracelet 600. The wristband may be understood to be comprised in a first housing. In the exemplary implementation of FIG. 6, a wireless connection may be used to send control signals from electronic device 110 to vibrating motor 120. For example, in one implementation, the wireless connection may include a BlueTooth wireless connection. By placing vibrating motor 120 in bracelet 600, vibrating motor 120 may be located nearly adjacent user 100's skin such that when bracelet 600 is worn by user 100, user 100 may easily feel any vibration of vibrating motor 120.

FIG. 7 is a diagram of an exemplary implementation of a system in which a wireless connection is used to connect electronic device 110 with a device 720 comprising vibrating motor 120. The exemplary implementation of FIG. 7 may, for example, correspond to use of wristwatch 510 of FIG. 5 or bracelet 600 of FIG. 6. As shown in FIG. 7, electronic device 110 may, among other components, include a vibrating motor control unit 700 and a transmitter 710. Vibrating motor control unit 400 may send control signals to transmitter 710 for transmission to device 720, containing vibrating motor 120, via a wireless connection 730 to cause vibrating motor 120 to vibrate as a vibratory alert to user 100. For example, device 720 may correspond to wristwatch 510 of FIG. 5 or bracelet 600 of FIG. 6. As further shown, device 720 may also include a receiver 740 for receiving control signals sent from electronic device 110 via transmitter 710. Transmitter 710 and receiver 740 may include circuitry that permits communication using, for example, the BlueTooth standard. Device 720 and electronic device 110 may include additional components than those shown in FIG. 7. FIG. 7 merely depicts some components of device 110 relevant to the control of vibrating motor 120 and to transmission of control signals from device 110 to device 720.

In one implementation, vibrating motor 120 may include a standard-sized vibrating motor for alerting user 100. Because, in one or more embodiments described above, vibrating motor 120 may be placed adjacent or nearly adjacent to the body of user 100, vibrating motor 120 may be sized smaller than the standard-sized vibrating motor while still providing the same level of tactile sensation to user 100. This embodiment may allow for energy savings and longer better life in portable electronic devices.

Implementations described herein enable the disposition of a vibrating motor, for alerts associated with the operation of an electronic device, in a device external to the electronic device such that the vibrating motor can be located adjacent, or nearly adjacent, to the body of the user. Location of the vibrating motor adjacent, or nearly adjacent, to the body of the user permits an enhanced tactile response from the user such that the user can more easily recognize a "buzzing" alert by the vibrating motor.

The foregoing description of the embodiments described herein provides illustration and description, but is not intended to be exhaustive or to limit the invention to the precise form disclosed. Modifications and variations are possible in light of the above teachings or may be acquired from practice of the invention.

For example, in one embodiment, electronic device 110 may use wireless signals to communicate with holster 140 rather than wired signals. In this embodiment, holster 140 may alert user 100 even when electronic device 110 is not in holster 140.

As another example, in one embodiment, electronic device 110 may include a vibrating motor and holster 140 may include an accelerometer that senses when the vibrating motor in electronic device 110 vibrates. In response to sensing the vibrations in electronic device 110, vibrating motor 120 in holster 140 may also vibrate to alert the user. In this embodiment, holster 140 may be compatible with any electronic device 110 without, for example, predetermined communication protocols between holster 140 and electronic device 110.

As yet another example, vibrating motor 120, having been placed close to the body of user 100, may use a different vibrating pattern for different types of alerts (e.g., a different pattern for a call, a page, an email, etc.). User 100 may detect and interpret the different pattern. A different vibrating pattern may be used for different callers or contacts, different originating email addresses, etc. In one embodiment, an entire received message (e.g., a text message) may be communicated to user 100 with different vibrating patterns (e.g., using Morse code to receive covert messages).

Wireless communication channels between electronic device 110 and vibrating motor 120 may include protocols other than BlueTooth, such as WiFi (IEEE 802.1 la/b/g/n) and/or other near field communication protocols.

In other embodiments, vibrating motor 120 (or its housing) may be taped or strapped to the body of user 100.

Certain features described herein may be implemented as "logic" or as a "unit" that performs one or more functions. This logic or unit may include hardware, such as one or more processors, microprocessors, application specific integrated circuits, or field programmable gate arrays, software, or a combination of hardware and software.

The term "comprises" or "comprising" as used herein, including the claims, specifies the presence of stated features, integers, steps, or components, but does not preclude the presence or addition of one or more other features, integers, steps, components, or groups thereof.

No element, act, or instruction used in the description of the present application should be construed as critical or essential to the invention unless explicitly described as such. Also, as used herein, the article "a" is intended to include one or more items. Where only one item is intended, the term "one" or similar language is used. Further, the phrase "based on," as used herein is intended to mean "based, at least in part, on" unless explicitly stated otherwise.

## Claims

1. A device (420, 720), comprising:
a first housing (130, 300) that is mountable adjacent to, or near, a body of a user (100);
a vibrating motor (120) disposed within the first housing (130, 300),
wherein the first housing (130, 300) is external to, and distinct from, a second housing (200) of an electronic device (110) that provides control signals to the vibrating motor (120) of the device, and
wherein the first housing (130, 300) comprises one of:
a clip mounted externally on the second housing (200) of the electronic device (110) and wherein the clip is configured to clip the electronic device (110) adjacent to the body of the user (100), or
a holster (140) that is configurable to hold the electronic device (110) and wherein the holster (140) is usable to hang, clip, or affix the first housing (300) in adjacent to or near the body of the user (100).

2. The device (420, 720) of claim 1, wherein the clip is mounted externally on the second housing (200) via a hinge and wherein the hinge comprises a spring hinge (206).

3. The device (420, 720) of any one of claims 1 and 2, wherein the vibrating motor (120) is disposed adjacent a top surface (202) of the clip and wherein clip is removably attached to the second housing (200).

4. The device (420, 720) of any one of the preceding claims, wherein the electronic device (110) comprises one of a pager or a cellular radiotelephone.

5. The device (420)of any one of the preceding claims, further comprising:
a wired electrical connection (410), wherein the control signals are supplied by the electronic device (110) to the vibrating motor (120) via the wired electrical connection (410),
wherein the electronic device (110) includes exposed electrical pads and wherein the holster (140) includes contacts that align with the exposed electrical pads to produce the wired electrical connection (410).

6. The device (720)of any one of claims 1-4, further including a receiver (740) to receive the control signals from the electronic device via a wireless connection (730).

7. The device (720) of claim 6, wherein the wireless connection (730) comprises a BlueTooth wireless connection.

8. A device (420, 720), comprising:
a first housing (500) that is mountable adjacent to, or near, a body of a user (100);
a vibrating motor (120) disposed within the first housing (500),
wherein the first housing (500) is external to, and distinct from, a second housing of an electronic device (110) that provides control signals to the vibrating motor (120) of the device, and
wherein the first housing comprises a wrist band (500) of a bracelet, or a buckle or strap of a belt.

9. The device (420, 720) of claim 8, wherein the electronic device (110) comprises one of a pager or a cellular radiotelephone.

10. The device (720) of any one of claims 8 and 9, further including a receiver (740) to receive the control signals from the electronic device (110) via a wireless connection (730).

11. The device (720) of claim 10, wherein the wireless connection (730) comprises a BlueTooth wireless connection.

12. A system for providing vibratory alerts, comprising:
an electronic device (110) having a second housing (200) and configured to provide vibratory alert control signals; and
a vibrating motor (120) disposed within a first housing (130, 300, 500) that is external to the second housing (200) of the electronic device (110), wherein the first housing (130, 300, 500) is mountable adjacent to or near the body of a user (100) to cause vibratory alerts in response to the vibratory alert control signals, and
wherein the first housing (130, 300, 500) comprises one of:
a clip mounted externally on the second housing (200) of the electronic device (110) and wherein the clip is configured to clip the electronic device (110) adjacent to the body of the user (100),
a holster (140) to hold the electronic device (110) and wherein the holster (140) is configured to hang, clip, or affix the first housing (300) adjacent to or near the body of the user (100),
a wrist band (500) of a bracelet (600), or
a buckle or strap of a belt.

13. The system of claim 12, wherein the electronic device (110) comprises one of a pager or a cellular radiotelephone.

14. The system of any one of claims 12 and 13, further comprising:
a wired electrical connection (410), wherein the vibratory alert control signals are supplied by the electronic device (110) to the vibrating motor (120) in the clip or the holster (140) via the wired electrical connection (410),
wherein the electronic device (110) includes exposed electrical pads and wherein the holster (140) includes contacts that align with the exposed electrical pads to produce the wired electrical connection.

15. The system of any one of claims 12 and 13, further comprising:
a transmitter (710) associated with the electronic device(110); and
a receiver (740) associated with the vibrating motor(120), wherein the vibratory alert control signals are supplied by the electronic device (110) to the vibrating motor (120) via a wireless connection (730) between the transmitter (710) and the receiver (740).
